# EUROPÄISCHE PATENTSCHRIFT

(11) **EP 1 897 717 B1**
(45) Veröffentlichungstag und Bekanntmachung des Hinweises auf die Patenterteilung: **14.10.2015**
(21) Anmeldenummer: 07015420.8
(22) Anmeldetag: 07.08.2007
(51) Int. Cl.: B60J 7/12

(54) **Faltverdeck**
Folding cover
Capote pliable

(30) Priorität: 08.09.2006 DE 102006042183
(43) Veröffentlichungstag der Anmeldung: 12.03.2008
(73) Patentinhaber: Dr. Ing. h.c. F. Porsche AG, 70435 Stuttgart (DE)
(72) Erfinder: Fröschle, Mathias, 73760 Ostfildern (DE); Liebhardt, Randolf, 71120 Grafenau (DE)

(56) Entgegenhaltungen:
- EP-A- 0 592 109
- DE-A1- 4 324 461
- DE-A1- 10 208 848
- DE-C1- 4 217 636
- US-B1- 6 695 385

## Beschreibung

Die Erfindung betrifft ein Faltverdeck in einem Kraftfahrzeug nach dem Oberbegriff des Anspruchs 1.

Ein solches Faltverdeck ist aus DE42 17 636 C1 bekannt.

Aus der DE 39 14 638 A1 ist ein mit einem Spannbügel ausgestattetes Faltverdeck für ein Kraftfahrzeug bekannt. Der Spannbügel ist durch zwei Kniehebel mit dem Verdeckgestänge gekoppelt, die, betätigt durch jeweils einen Hydraulikzylinder, den Spannbügel zwischen seiner angehobenen und seiner abgesenkten Stellung hin und her verstellen können. Um den Spannbügel in seiner abgesenkten Position zu sichern, ist jeder Kniehebel mit einer Verriegelungseinrichtung versehen, die durch den Aktuator geöffnet wird, wenn der Spannbügel von seiner abgesenkten in seine angehobene Position bewegt wird. Zum Verriegeln muss lediglich der Spannbügel in seine abgesenkte Position bewegt werden, wobei die Verriegelungseinrichtungen selbstständig verrasten.

Aufgabe der Erfindung ist es, ein Faltverdeck in einem Kraftfahrzeug anzugeben, bei dem insbesondere eine Sicherung des Spannbügels in seiner abgesenkten Position auf einfache Weise möglich ist.

Erfindungsgemäß wird diese Aufgabe durch ein Faltverdeck mit den Merkmalen nach Anspruch 1 gelöst. Bevorzugte Ausführungsformen sind Gegenstand der Unteransprüche.

Bei dem erfindungsgemäßen Faltverdeck wird der Spannbügel in seiner geschlossenen Stellung unmittelbar am Verdeckgestänge, d.h. am Hauptlenker oder an der B-Säule des Verdeckgestänges verriegelt. Durch das unmittelbare Verriegeln des Spannbügels am Verdeckgestänge wird einerseits eine in sich starre Anordnung aus dem Spannbügel und dem Verdeckgestänge realisiert, wodurch die Steifigkeit des gesamten Dachaufbaus auf einfache Weise erhöht wird. Ferner sind hierfür keine weiteren Sicherungskomponenten, wie zusätzliche Lenkeranordnungen oder Schlösser notwendig, wie sie im Stand der Technik üblich sind. Ferner lässt sich durch die Verriegelung des Spannbügels am Verdeckgestänge die hierfür erforderliche Verriegelungseinrichtung in einen für den Benutzer des Fahrzeuges nicht einsehbaren Bereich anordnen, wodurch das Erscheinungsbild des Fahrzeuges zusätzlich verbessert ist.

Weitere Vorteile und Vorzüge der Erfindung ergeben sich aus der nachfolgenden Beschreibung sowie der Zeichnung.

So wird gemäß einer bevorzugten Ausführungsform des erfindungsgemäßen Faltverdecks vorgeschlagen, dass die Verriegelungseinrichtung mindestens einen den Spannbügel mit dem Verdeckgestänge verbindenden Sperrlenker aufweist, welcher relativ zum Verdeckgestänge oder zum Spannbügel zwischen einer Freigabestellung und einer Sperrstellung bewegbar ist, in der er durch ein Sperrglied verriegelbar ist. Unter Sperrlenker wird in diesem Zusammenhang ein einzelnes starres Element verstanden, beispielsweise ein Hebel, welcher durch das Sperrglied in einer vorgegebenen Position verriegelt wird, um den Spannbügel zu sichern. Bereits durch diesen einfachen Aufbau der Verriegelungseinrichtung lässt sich der Spannbügel ordnungsgemäß gegen ein ungewünschtes Öffnen sichern.

Bei einer Weiterbildung dieser Ausführungsform weist der Sperrlenker ein Langloch auf, in dem ein am Verdeckgestänge oder am Spannbügel vorgesehener Lagerbolzen zwischen der Freigabestellung und der Sperrstellung verschieblich aufgenommen und durch das Sperrglied in der Sperrstellung verriegelbar ist. Durch das verschiebliche Aufnehmen des Lagerbolzens im Langloch ist eine definierte Position des Lagerbolzens relativ zum Sperrglied sichergestellt, so dass mit hoher Sicherheit eine Verriegelung erfolgt.

Ferner wird bei dieser Weiterbildung zusätzlich vorgeschlagen; als Sperrglied einen am Spannbügel oder am Verdeckgestänge schwenkbar gelagerten Verriegelungshaken zu verwenden, welcher zum Verriegeln mit dem am Verdeckgestänge oder am Spannbügel vorgesehenen Lagerbolzen in Eingriff bringbar ist. Mit Hilfe dieses verhältnismäßig einfachen Elementes ist eine sehr wirkungsvolle Verriegelung des Spannbügels in seiner abgesenkten Stellung gewährleistet.

Das Sperrglied kann entweder selbstständig einrasten oder aber auch durch einen Aktuator zum Verriegeln betätigt werden. Zum Lösen des Sperrgliedes wird insbesondere aus Sicherheitsgründen vorgeschlagen, ausschließlich einen Aktuator zu verwenden, der entsprechend extern angesteuert das Sperrglied löst. Die Ansteuerung des Sperrgliedes kann dabei beispielsweise über einen separaten Hydraulikzylinder oder Pneumatikzylinder, aber auch durch ein elektromagnetisches Stellelement erfolgen. Ferner ist es möglich, dass Sperrglied mit dem automatischen Verdeckverschluss, mit dem das Faltverdeck insgesamt verriegelt wird, beispielsweise über einen Bowdenzug oder über eine Lenkeranordnung zu koppeln.

Zum Verstellen des Spannbügels ist vorzugsweise mindestens ein Linearaktuator, beispielsweise ein Hydraulikzylinder, ein Pneumatikzylinder oder auch ein Linearmotor, vorgesehen ist, welcher mit seinem einen Ende am Spannbügel und mit seinem anderen Ende am Verdeckgestänge derart angelenkt ist, dass sich der Spannbügel beim Ausfahren des Linearaktuators in seine abgesenkte Stellung bewegt. Der Linearaktuator ist dabei vorzugsweise unmittelbar benachbart zur Verriegelungseinrichtung angeordnet, um ein sicheres Verriegeln des Spannbügels in dessen abgesenkter Stellung zu gewährleisten. So ist es besonders vorteilhaft, wenn der Linearaktuator und die Verriegelungseinrichtung am Steuerlenker des Verdeckgestänges unmittelbar benachbart nebeneinander vorgesehen sind.

Durch das Verriegeln des Spannbügels am Verdeckgestänge wird ferner erreicht, dass, selbst wenn der Linearaktuator die erforderliche Vorspannkraft nicht mehr aufbringen kann, der Spannbügel in seiner abgesenkten Stellung gesichert ist. Aus diesem Grund wird vorgeschlagen, den Linearaktuator so zwischen dem Verdeckgestänge und dem Spannbügel anzuordnen, dass der Linearaktuator in seiner eingefahren Position den Spannbügel in der angehobenen Stellung hält. Soll dann das Verdeck geöffnet werden, ist der Spannbügel durch den eingefahrenen Linearaktuator starr mit dem Verdeckgestänge koppelt.

Des weiterten wird bei einer Weiterbildung der mit einem Linearaktuator ausgestatteten Ausführungsform vorgeschlagen, dass das eine Ende des Linearaktuators an demselben Gelenk angelenkt ist, an dem der Sperrlenker angelenkt ist. Hierdurch wird erreicht, dass die beim Vorspannen des Spannbügels entstehenden Kräfte an derselben Wirkstelle angreifen, wodurch ein Verformen des Spannbügels in dem betreffenden Bereich auf das Verriegeln des Spannbügels keinerlei Einfluss hat.

Nachfolgend wird die Erfindung anhand eines Ausführungsbeispieles unter Bezugnahme auf die Zeichnung näher erläutert. Darin zeigt:
- Fig. 1: eine schematische Seitenansicht eines Ausschnittes des erfindungsgemäßen Faltverdecks, in der eine verriegelbare Kopplung des Verdeckgestänges mit einem Spannbügel des Faltverdecks dargestellt ist, wobei der Spannbügel abgesenkt ist,
- Fig. 2: einen Ausschnitt der Seitenansicht nach Fig. 1, in der der Spannbügel in seiner angehoben Position dargestellt ist, sowie
- Fig. 3: eine vergrößerte schematische Darstellung der verriegelbaren Kopplung von der Innenseite des Faltverdecks her.

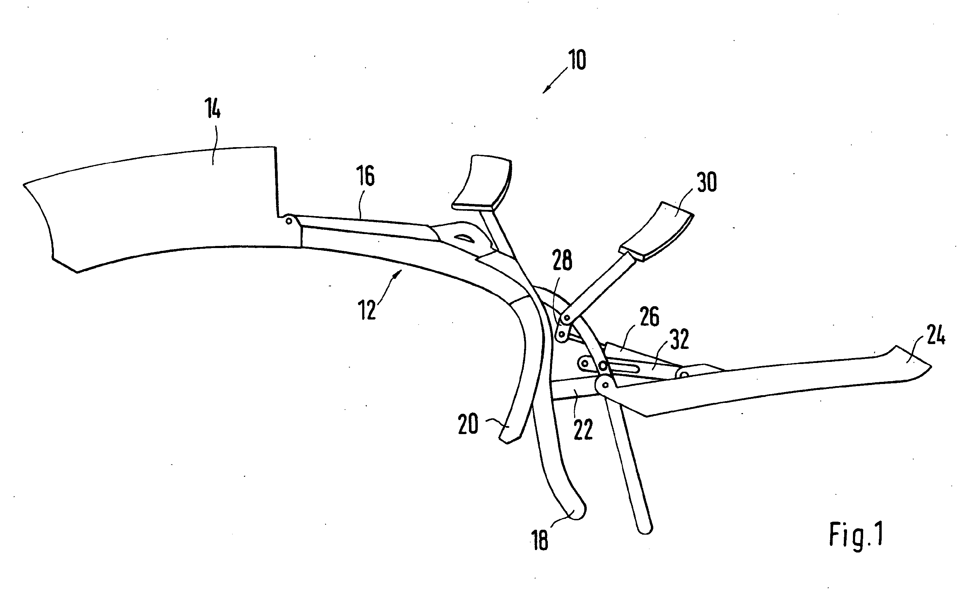

Fig. 1 zeigt in schematischer Seitenansicht einen Ausschnitt des erfindungsgemäßen Faltverdecks 10 im Bereich des Fahrzeughecks eines Kraftfahrzeuges. Das Faltverdeck 10 weist ein Verdeckgestänge 12 auf, welches in einen ersten Dachrahmen 14 und einen zweiten Dachrahmen 16 untergliedert ist. Die beiden Dachrahmen 14 und 16 sind durch nicht näher gezeigte Lenker schwenkbar miteinander verbunden. Das Verdeckgestänge 12 weist ferner beidseitig jeweils zwei Lenker 18 und 20 auf, wobei der erste Lenker 18 gleichzeitig als B-Säule dient, wenn das Faltverdeck 10 geschlossen ist, während der zweite Lenker 20 als Steuerlenker dient. Die beiden Lenker 18 und 20 sind in bekannter Weise an einem karosseriefesten Verdecklager schwenkbar gelagert, welches in Fig. 1 nicht gezeigt ist.

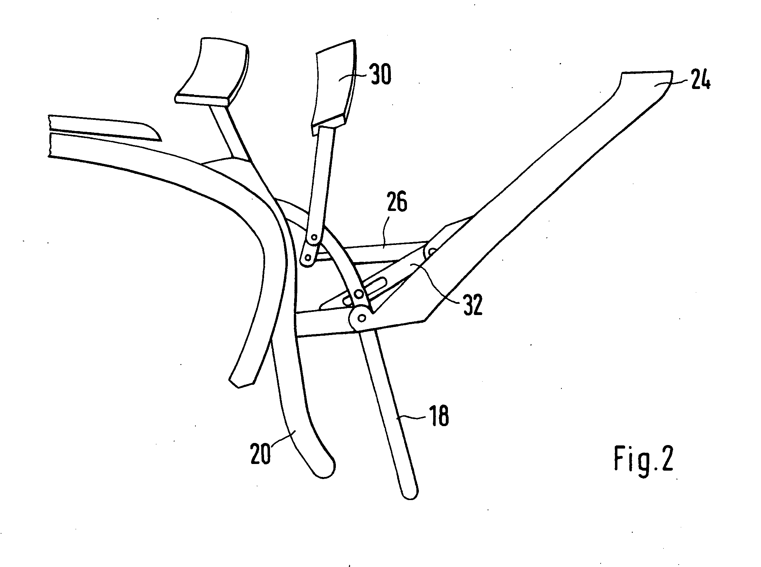

An dem ersten Lenker 18 ist ein etwa rechtwinklig zu dessen Längsrichtung verlaufender Fortsatz 22 durch Schweißen befestigt, der als Lagerstelle für einen Spannbügel 24 dient. Der Spannbügel 24 ist zwischen einer abgesenkten Stellung (vgl. Fig. 1) und einer angehobenen Stellung (Fig. 2) schwenkbar. In der abgesenkten Stellung liegt der Spannbügel 24 mit an dessen Unterseite vorgesehenen Dichtungsmitteln unter Vorspannung auf der Oberfläche eines Verdeckkastendeckels (nicht dargestellt) der Karosserie auf. In angehobener Stellung ist der Spannbügel 24 soweit von dem Verdeckkastendeckel entfernt positioniert, dass der Verdeckkastendeckel problemlos geöffnet und für das Zusammenfalten des Faltverdecks 10 in den Verdeckkasten beiseite bewegt werden kann.

Zum Verstellen des Spannbügels 24 ist ein Hydraulikzylinder 26 an jeder Innenseite des bogenförmig verlaufenden Spannbügels 24 nahe der Lagerstellen des Spannbügels 24 an den ersten Lenkern 18 vorgesehen. Jeder Hydraulikzylinder 26 ist hierbei mit seinem Zylindergehäuse schwenkbar am Spannbügel 24 angelenkt. Die Kolbenstange jedes Hydraulikzylinders 26 ist an einer Abstützung 28 angelenkt, welche von dem zweiten Lenker 20 in Richtung des Hydraulikzylinders 26 absteht. Nahe der Abstützung 28 ist ein Eckspriegel 30 vorgesehen, welcher das Faltverdeck 10 in geschlossenem Zustand von Innen definiert abstützt.

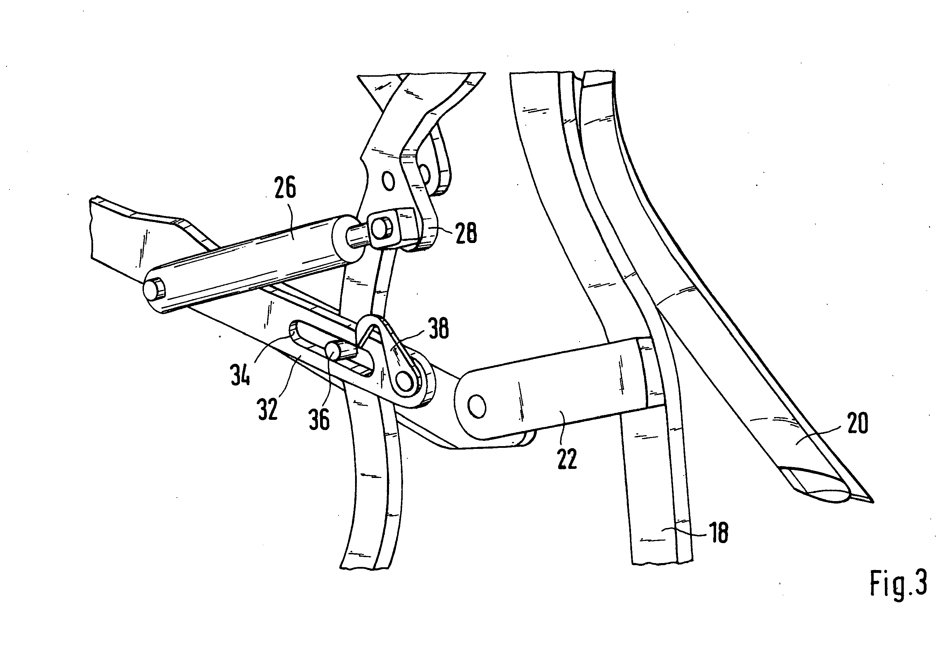

Wie Fig. 3 zeigt, ist unmittelbar benachbart zum Hydraulikzylinder 26 an der gleichen Anlenkstelle am Spannbügel 24, an der das Zylindergehäuse des Hydraulikzylinders 26 gelagert ist, ein Sperrlenker 32 angelenkt, welcher sich in Richtung des zweiten Lenkers 20 erstreckt. In Längsrichtung des Sperrlenkers 32 ist in diesem ein Langloch 34 ausgebildet, entlang dem ein von der Flachseite des zweiten Lenkers 20 abstehender Lagerbolzen 36 zwischen einer Freigabestellung und einer Sperrstellung bewegbar ist. Am freien Ende des Sperrlenkers 32 ist ein Verriegelungshaken 38 schwenkbar gelagert, welcher mit dem Lagerbolzen 36 selbstständig in Eingriff kommt, wenn sich dieser in seiner Sperrstellung befindet. Mit Hilfe eines nicht dargstellten Aktuators kann der Verriegelungshaken 38 geöffnet werden, wie später noch erläutert wird.

Durch Ausfahren des Hydraulikzylinders 26 wird der Spannbügel 24 in seine abgesenkte Stellung bewegt. Gleichzeitig verlagert sich der am zweiten Lenker 20 vorgesehene Lagerbolzen 36 entlang des Langlochs 34 (vgl. Fig. 2) und hebt schließlich am Ende des Langlochs 34 den Verriegelungshaken 38 kurzfristig an und kommt mit diesem in Eingriff, sobald der Spannbügel 24 unter Vorspannung auf dem Verdeckkastendeckel aufsitzt. Anschließend kann der Druck am Hydraulikzylinder 26 wieder reduziert werden.

Zum Lösen des Spannbügels 24 wird der Hydraulikzylinder 26 kurzfristig unter Druck gesetzt und gleichzeitig der Verriegelungshaken 38 mit Hilfe eines nicht dargestellten Aktuators angehoben, um den Lagerbolzen 36 freizugeben. Anschließend wird der Druck im Hydraulikzylinder 26 vermindert und die Kolbenstange des Hydraulikzylinders 36 eingefahren, wodurch der Spannbügel 24 angehoben wird.

### Bezugszeichenliste:

10 Faltverdeck
12 Verdeckgestänge
14 erster Dachrahmen
16 zweiter Dachrahmen
18 erster Lenker
20 zweiter Lenker
22 Fortsatz
24 Spannbügel
26 Hydraulikzylinder
28 Abstützung
30 Eckspriegel
32 Sperrlenker
34 Langloch
36 Lagerbolzen
38 Verriegelungshaken

## Patentansprüche

1. Faltverdeck für ein Kraftfahrzeug, mit einem Verdeckgestänge (12), wobei das Kraftfahrzeug zwei karosseriefeste Verdecklager aufweist, an welchen das al Verdeckgestänge (12) des Faltverdecks (10) zwischen einer geschlossenen Verdeckstellung und einer abgesenkten Verdeckstellung schwenkbar lagerbar ist, einem mit dem Verdeckgestänge (12) gekoppelten Spannbügel (24), welcher zwischen einer angehobenen Stellung beabstandet zur Karosserie des Fahrzeuges und einer abgesenkten Stellung schwenkbar ist, in der der Spannbügel (24) mit seiner Unterseite an einem Abschnitt der Karosserie abdichtend anlegbar sowie einer Verriegelungseinrichtung (26, 38) zum Sichern des Spannbügels (24) in seiner abgesenkten Stellung, **dadurch gekennzeichnet, dass** die Verriegelungseinrichtung (32, 36, 38) den Spannbügel (24) in seiner abgesenkten Stellung am Verdeckgestänge (12) verriegelt.

2. Faltverdeck nach Anspruch 1, **dadurch gekennzeichnet, dass** die Verriegelungseinrichtung mindestens einen den Spannbügel (24) mit dem Verdeckgestänge (12) verbindenden Sperrlenker (32) aufweist, welcher relativ zum Verdeckgestänge (12) oder zum Spannbügel (24) zwischen einer Freigabestellung und einer Sperrstellung bewegbar ist, in der er durch ein Sperrglied (38) verriegelbar ist.

3. Faltverdeck nach Anspruch 2, **dadurch gekennzeichnet, dass** der Sperrlenker (32) ein Langloch (34) aufweist, in dem ein am Verdeckgestänge (12) oder am Spannbügel (24) vorgesehener Lagerbolzen (36) zwischen der Freigabestellung und der Sperrstellung verschieblich aufgenommen und durch das Sperrglied (38) in der Sperrstellung verriegelbar ist.

4. Faltverdeck nach Anspruch 3, **dadurch gekennzeichnet, dass** das Sperrglied ein am Spannbügel (24) oder am Verdeckgestänge (12) schwenkbar gelagerter Verriegelungshaken (38) ist, welcher zum Verriegeln mit dem am Verdeckgestänge (12) oder am Spannbügel (24) vorgesehenen Lagerbolzen (36) in Eingriff bringbar ist.

5. Faltverdeck nach einem der Ansprüche 2 bis 4, **dadurch gekennzeichnet, dass** das Sperrglied (38) durch einen Aktuator betätigbar ist.

6. Faltverdeck nach einem der vorhergehenden Ansprüche, **dadurch gekennzeichnet, dass** zum Verstellen des Spannbügels (24) mindestens ein Linearaktuator (26) vorgesehen ist, welcher mit seinem einen Ende am Spannbügel (24) und mit seinem anderen Ende am Verdeckgestänge (12) derart angelenkt ist, dass sich der Spannbügel (24) beim Ausfahren des Linearaktuators (26) in seine abgesenkte Stellung bewegt.

7. Faltverdeck nach Anspruch 6, **dadurch gekennzeichnet, dass** der Linearaktuator (26) in seiner eingefahrenen Position den Spannbügel (24) in der angehobenen Stellung hält und beim Öffnen des Faltverdecks (10) den Spannbügel (24) starr mit dem Verdeckgestänge (12) koppelt.

8. Faltverdeck nach Anspruch 7 oder 8, **dadurch gekennzeichnet, dass** das eine Ende des Linearaktuators (26) an dem gleichen Gelenk angelenkt ist, an dem der Sperrlenker (32) angelenkt ist.

9. Kraftfahrzeug mit wenigstens einem als Brennkraftmaschine ausgebildeten Antriebsmotor, der über ein Getriebe wenigstens eine Achse antreibt, **dadurch gekennzeichnet, dass** es ein Faltverdeck nach wenigstens einem der Ansprüche 1 bis 8 aufweist.

## Claims

1. Folding cover for a motor vehicle, with a cover linkage (12), wherein the motor vehicle has two cover bearings which are fixed on the vehicle body and on which the cover linkage (12) of the folding cover (10) can be mounted so as to be pivotable between a closed position of the cover and a lowered position of the cover, with a clamping hoop (24) which is coupled to the cover linkage (12) and is pivotable between a raised position spaced apart from the vehicle body and a lowered position in which the clamping hoop (24) can bear in a sealing manner with the lower side thereof against a section of the body, and a locking device (26, 38) for securing the clamping hoop (24) in the lowered position thereof, **characterized in that** the locking device (32, 36, 38) locks the clamping hoop (24) in the lowered position thereof on the cover linkage (12).

2. Folding cover according to Claim 1, **characterized in that** the locking device has at least one blocking link (32) which connects the clamping hoop (24) to the cover linkage (12) and is movable relative to the cover linkage (12) or to the clamping hoop (24) between a release position and a blocking position in which said blocking link is lockable by a blocking member (38).

3. Folding cover according to Claim 2, **characterized in that** the blocking link (32) has an elongated hole (34) in which a bearing pin (36), which is provided on the cover linkage (12) or on the clamping hoop (24), is accommodated so as to be displaceable between the release position and the blocking position, and is lockable in the blocking position by the blocking member (38).

4. Folding cover according to Claim 3, **characterized in that** the blocking member is a locking hook (38) which is mounted pivotably on the clamping hoop (24) or on the cover linkage (12) and can be brought into engagement, for locking purposes, with the bearing pin (36) provided on the cover linkage (12) or on the clamping hoop (24).

5. Folding cover according to one of Claims 2 to 4, **characterized in that** the blocking member (38) is actuable by an actuator.

6. Folding cover according to one of the preceding claims, **characterized in that**, in order to adjust the clamping hoop (24), at least one linear actuator (26) is provided which is coupled at one end thereof to the clamping hoop (24) and at the other end thereof to the cover linkage (12) in such a manner that the clamping hoop (24) moves into the lowered position thereof when the linear actuator (26) is extended.

7. Folding cover according to Claim 6, **characterized in that** the linear actuator (26), in the retracted position thereof, holds the clamping hoop (24) in the raised position and, when the folding cover (10) is opened, couples the clamping hoop (24) rigidly to the cover linkage (12).

8. Folding cover according to Claim 7 or 8, **characterized in that** the one end of the linear actuator (26) is coupled to the same joint to which the blocking link (32) is coupled.

9. Motor vehicle with at least one driving engine which is embodied as an internal combustion engine and drives at least one axle via a gearbox, **characterized in that** it has a folding cover according to at least one of Claims 1 to 8.

## Revendications

1. Capote pliable pour un véhicule automobile, comprenant une tringlerie de capote (12), le véhicule automobile présentant deux supports de capote fixés à la carrosserie, sur lesquels la tringlerie de capote (12) de la capote pliable (10) peut être supportée de manière pivotante entre une position de capote fermée et une position de capote abaissée, comprenant un arceau de tensionnement (24) accouplé à la tringlerie de capote (12), lequel peut pivoter entre une position soulevée espacée de la carrosserie du véhicule et une position abaissée, dans laquelle l'arceau de tensionnement (24) peut être appliqué de manière hermétique avec son côté inférieur contre une portion de la carrosserie et comprenant un dispositif de verrouillage (26, 38) pour fixer l'arceau de tensionnement (24) dans sa position abaissée, **caractérisée en ce que** le dispositif de verrouillage (32, 36, 38) verrouille l'arceau de tensionnement (24) dans sa position abaissée sur la tringlerie de capote (12).

2. Capote pliable selon la revendication 1, **caractérisée en ce que** le dispositif de verrouillage présente au moins un bras de blocage (32) reliant l'arceau de tensionnement (24) à la tringlerie de capote (12), lequel peut être déplacé par rapport à la tringlerie de capote (12) ou par rapport à l'arceau de tensionnement (24) entre une position de libération et une position de blocage dans laquelle il peut être verrouillé par un organe de blocage (38).

3. Capote pliable selon la revendication 2, **caractérisée en ce que** le bras de blocage (32) présente un trou oblong (34) dans lequel un boulon de palier (36) prévu sur la tringlerie de capote (12) ou sur l'arceau de tensionnement (24) est reçu de manière déplaçable entre la position de libération et la position de blocage et peut être verrouillé par l'organe de blocage (38) dans la position de blocage.

4. Capote pliable selon la revendication 3, **caractérisée en ce que** l'organe de blocage est un crochet de verrouillage (38) supporté de manière pivotante sur l'arceau de tensionnement (24) ou sur la tringlerie de capote (12), lequel peut être amené en prise avec le boulon de palier (36) prévu sur la tringlerie de capote (12) ou sur l'arceau de tensionnement (24) en vue du verrouillage.

5. Capote pliable selon l'une quelconque des revendications 2 à 4, **caractérisée en ce que** l'organe de blocage (38) peut être actionné par un actionneur.

6. Capote pliable selon l'une quelconque des revendications précédentes, **caractérisée en ce que** pour le déplacement de l'arceau de tensionnement (24), il est prévu au moins un actionneur linéaire (26) qui est articulé à l'une de ses extrémités à l'arceau de tensionnement (24) et à son autre extrémité à la tringlerie de capote (12) de telle sorte que l'arceau de tensionnement (24) se déplace dans sa position abaissée lors de la sortie de l'actionneur linéaire (26).

7. Capote pliable selon la revendication 6, **caractérisée en ce que** l'actionneur linéaire (26) retient dans sa position rentrée l'arceau de tensionnement (24) dans la position soulevée et lors de l'ouverture de la capote pliable (10) accouple l'arceau de tensionnement (24) rigidement à la tringlerie de capote (12).

8. Capote pliable selon la revendication 7 ou 8, **caractérisée en ce que** l'une des extrémités de l'actionneur linéaire (26) est articulée à la même articulation à laquelle est articulé le bras de blocage (32).

9. Véhicule automobile comprenant au moins un moteur d'entraînement réalisé sous forme de moteur à combustion interne, qui entraîne au moins un axe par le biais d'une transmission, **caractérisé en ce qu'**il présente une capote pliable selon au moins l'une quelconque des revendications 1 à 8.
